# EUROPÄISCHE PATENTSCHRIFT

(11) **EP 0 824 492 B1**
(45) Veröffentlichungstag und Bekanntmachung des Hinweises auf die Patenterteilung: **14.07.1999**
(21) Anmeldenummer: 96914060.7
(22) Anmeldetag: 01.05.1996
(51) Int. Cl.: B65G 47/84

(54) **ÜBERGABEVORRICHTUNG**
TRANSFER DEVICE
DISPOSITIF DE TRANSFERT

(30) Priorität: 04.05.1995 DE 19516036; 21.06.1995 DE 19522417
(43) Veröffentlichungstag der Anmeldung: 25.02.1998
(73) Patentinhaber: Maschinen- und Stahlbau Julius Lippert GmbH & Co., 92686 Pressath (DE)
(72) Erfinder: ZEIS, Hans, D-92711 Parkstein (DE)
(74) Vertreter: LOUIS, PÖHLAU, LOHRENTZ & SEGETH
(86) Internationale Anmeldenummer: DE9600804
(87) Internationale Veröffentlichungsnummer: WO9634816

(56) Entgegenhaltungen:
- WO-A-84/00144
- DE-A- 3 624 411
- US-A- 3 083 808

## Beschreibung

Die Erfindung betrifft eine Vorrichtung zum Übergeben eines Gegenstandes von einer ersten Transporteinrichtung an eine davon abzweigende zweite Transporteinrichtung gemäss dem Oberbegriff des Anspruchs 1.

Derartige Vorrichtungen kommen beispielsweise im Grossversandhandel, bei der Paketpost od.dgl. zur Anwendung.

Aus der DE-A 36 24 411 ist eine Vorrichtung zum Übergeben eines Gegenstandes von einer ersten Transporteinrichtung an eine zweite Transporteinrichtung mit Verschiebeorganen bekannt, die an zugehörigen Schwenkarmen gelagert sind. Diese bekannte Vorrichtung ist derartig ausgebildet, daß mit zunehmendem Drehwinkel beim Überschiebevorgang die Winkelgeschwindigkeit der Schwenkarme vergrößert wird. Auf diese Weise wird dort eine annähernd konstante Überschiebegeschwindigkeit erzielt.

Die US-A 3 083 808 beschreibt eine Vorrichtung zum Übergeben eines Gegenstandes von einer ersten Transporteinrichtung an eine zweite Transporteinrichtung nach dem Oberbegriff des Anspruchs 1 mit mindestens zwei Verschiebeorganen, die jeweils an einem Schwenkarm gelagert sind. Bei dieser bekannten Vorrichtung führen die Schwenkarme eine konstante Drehgeschwindigkeit durch. Die Verschiebeorgane können dort eine zusätzliche Drehung ausführen, um sie der Orientierung der zweiten Transporteinrichtung entsprechend schräg zu positionieren.

Die WO 84/00144 offenbart eine Vorrichtung zum Übergeben eines Gegenstandes von einer ersten Transporteinrichtung an eine zweite Transporteinrichtung, wobei die Schwenkarme mit Hilfe eines geeigneten Getriebes eine erste Drehung um einen Dreharm und zusätzlich eine überlagerte Drehung in bezug auf den Dreharm durchführen. Dabei sind die beiden Drehungen durch das besagte Getriebe aneinander derartig angepaßt, daß die Verschiebeorgane jeweils eine dreieckige Bewegungsbahn durchlaufen.

Aus der EP-A 0 182 938 ist eine Umsetzvorrichtung zum wahlweisen Umsetzen von Stückgütern bekannt, die einen Dreharm aufweist, der zum Umsetzen bspw. eines Behälters von einem Stückgutförderer auf einen anderen Stückgutförderer verschwenkt wird. Die Schwenkrichtung des Dreharms verläuft gleichsinnig zur Förderrichtung der Stückgutförderer. An dem Dreharm sind Anlegeelemente befestigt, deren Anlegeflächen über einen Zahnrad-Kettentrieb während der Drehbewegung parallel zur Förderrichtung verbleiben. Dabei ist die zweite Transporteinrichtung zur ersten Transporteinrichtung parallel orientiert vorgesehen, so daß es dort nur möglich ist, Gegenstände auf der ersten Transporteinrichtung zu belassen oder sie von dieser an die zweite Transporteinrichtung zu übergeben. Das bedeutet jedoch, dass die Sortierleistung dieser bekannten Vorrichtung relativ gering ist.

Die DE 32 41 100 A1 beschreibt eine Vorrichtung zum Abweisen von Stückgütern, insbesondere von Paketen, oder zum Ausschleusen einzelner Stückgüter aus einer Reihe von hintereinander auf einem Zuführband transportierten Stückgütern. Um die Stückgüter einzeln oder insgesamt aus einem auf einem Zuführband zugeführten Stückgutstrom ausschleusen zu können, ist im Stückgutabweisungs- bzw. - ausschleusungsbereich oberhalb des Zuführbandes ein Abweiser mit mindestens einer in Zuführbandlaufrichtung auf einer Kreisbahn verlaufenden Abweiserrolle angeordnet, mittels der das jeweils auszuschleusende Stückgut seitlich und/oder unterkantenseitig erfasst und aus der Laufrichtung herausgedrückt wird. Dabei erfasst eine gummierte Transportrolle das Stückgut, das in Längsrichtung unter einem Winkel von 90° zum Stückgutzulaufstrom auf dem Zuführband weitergeleitet wird.

Aus DE 37 34 599 C1 ist eine Vorrichtung zum Aussortieren von als fehlerhaft erkannten Flaschen bekannt. Diese Aussortiervorrichtung ist derartig ausgebildet, dass der Weg, um den die Flaschen beim Aussortieren quer zur Bandlaufrichtung verschoben werden, unabhängig von deren Füllungsgrad ist, und durch einen Antrieb gesteuert wird. Die zum Überschieben von fehlerhaften Flaschen von einem Hauptförderband auf ein Aussortierband bestehende Aussortiervorrichtung weist einen durch eine Erkennungsstation für fehlerhafte Flaschen zeitgenau angesteuerten, quer zur Hauptförderrichtung bewegbaren Schieber mit einer mit zwei Borstenreihen bestückten Schieberplatte und einen an dieser angeordneten Stössel und eine bedarfsweise für eine Umdrehung pro auszusortierender Flasche antreibbare, an dem Stössel anliegende Kurvenscheibe für den Vortrieb und ein Rückstellglied für den Rückhub des Schiebers auf.

Der Erfindung liegt die Aufgabe zugrunde, eine Vorrichtung mit mindestens zwei drehbar auf Armen gelagerten Verschiebeorganen zu schaffen, deren Schiebefläche mit einer einzigen Drehachse stets parallel zur Transportrichtung einer Transporteinrichtung ausgerichtet wird und einen Gegenstand auf eine zweite bei der Transporteinrichtung abzweigende Transporteinrichtung verschiebt, wobei auch empfindliche Gegenstände mit einer hohen Taktzahl geräuscharm zuverlässig verschiebbar sind.

Diese Aufgabe wird bei einer Vorrichtung der eingangs genannten Art durch die Merkmale des kennzeichnenden Teiles des Anspruchs 1 gelöst. Bevorzugte Weiterbildungen der erfindungsgemässen Vorrichtung sind in den Unteransprüchen gekennzeichnet.

Um einen herkömmlichen preisgünstigen Antriebsmotor anwenden und die Vorrichtung mit hohen Taktzahlen betreiben zu können, ist die Antriebswelle mit dem Antriebsmotor über ein Getriebe verbunden. Dieses Getriebe ist erfindungsgemäß zur definierten, drehwinkelabhängigen Änderung der Drehgeschwindigkeit der Antriebswelle in der Weise vorgesehen, daß während der Anlagephase, d.h. während des Bewegungsabschnittes des Schwenkarms, bei welchem das zugehörige Verschiebeorgan an dem von der ersten Transporteinrichtung an die zugehörige zweite Transporteinrichtung zu übergebenden Gegenstand zur Anlage kommt, die Antriebswelle und somit der mindestens eine Schwenkarm vergleichsweise langsam angetrieben, d.h. gedreht wird, um Beschädigungen des zu manipulierenden bzw. zu sortierenden Gegenstandes auch dann zuverlässig zu vermeiden, wenn der Gegenstand bzw. seine Verpackung stossempfindlich ist. Bei diesen Gegenständen handelt es sich z.B. um Pakete beliebiger Art. Nach dieser Anlage-Bewegungsphase wird dann der Schwenkarm im Vergleich zur Geschwindigkeit während der Anlagephase schnell angetrieben, um mit der Vorrichtung die gewünschten Taktzahlen auch bei empfindlichen Gegenständen geräuscharm zu erzielen.

Von der Antriebswelle kann ein einziger Schwenkarm radial wegstehen; bevorzugt ist es jedoch, wenn von der Antriebswelle in Umfangsrichtung gleichmässig verteilt eine Anzahl Schwenkarme radial wegstehen. Weist die Vorrichtung zwei Schwenkarme auf, dann ist es möglich, die Antriebswelle relativ nahe neben der ersten Transporteinrichtung vorzusehen. Sind mehr als zwei Schwenkarme vorhanden, so ist es selbstverständlich erforderlich, die Antriebswelle von der ersten Transporteinrichtung derartig zu beabstanden, dass jeweils nur einer der Schwenkarme mit seinem freien Endabschnitt während einer Drehung der Antriebswelle die erste Transporteinrichtung zur zweiten Transporteinrichtung hin überstreicht.

Eine einfache Anpassbarkeit der Vorrichtung an mögliche Gegebenheiten bezüglich der Abmessungen der ersten und/oder der zweiten Transporteinrichtung ist erreichbar, wenn jeder Schwenkarm in seiner Länge einstellbar ausgebildet ist. Der jeweiligen Schwenkarm-Länge entsprechend ist dann das mindestens eine endlose Umschlingungselement zu dimensionieren und auszuwählen.

Beschädigungen der zu manipulierenden, d.h. von der ersten Transporteinrichtung zu einer zweiten Transporteinrichtung zu übergebenden und auszuschleusenden, Gegenstände sind weiter verbessert vermeidbar, wenn jedes Verschiebeorgan einen begrenzt nachgiebigen Druckkörper aufweist. Bei diesem Druckkörper kann es sich um eine Platte aus einem Schwammaterial, aus einem Kunststoffschaummaterial, um ein bürstenartiges Gebilde od.dgl. handeln.

Das/jedes erste Umlenkorgan und das jeweilige zweite Umlenkorgan können als Kettenzahnräder und jedes endlose Umschlingungselement kann als endlose Zahnradkette ausgebildet sein. Anstelle von Kettenzahnrädern und endlosen Zahnradketten ist es auch möglich, das erste und das jeweilige zweite Umlenkorgan beispielsweise als gezahnte Kegelräder und das endlose Umschlingungselement als endlosen Zahnriemen zu gestalten.

Ein Ausführungsbeispiel der erfindungsgemässen Vorrichtung zum Übergeben eines Gegenstandes von einer ersten an eine davon abzweigende zweite Transporteinrichtung ist in der Zeichnung dargestellt und wird nachfolgend beschrieben. Es zeigen:
- Figur 1: eine Ansicht der Vorrichtung von oben, und
- Figur 2: teilweise aufgeschnitten eine Ansicht der Vorrichtung gemäss Figur 1 von der Seite.

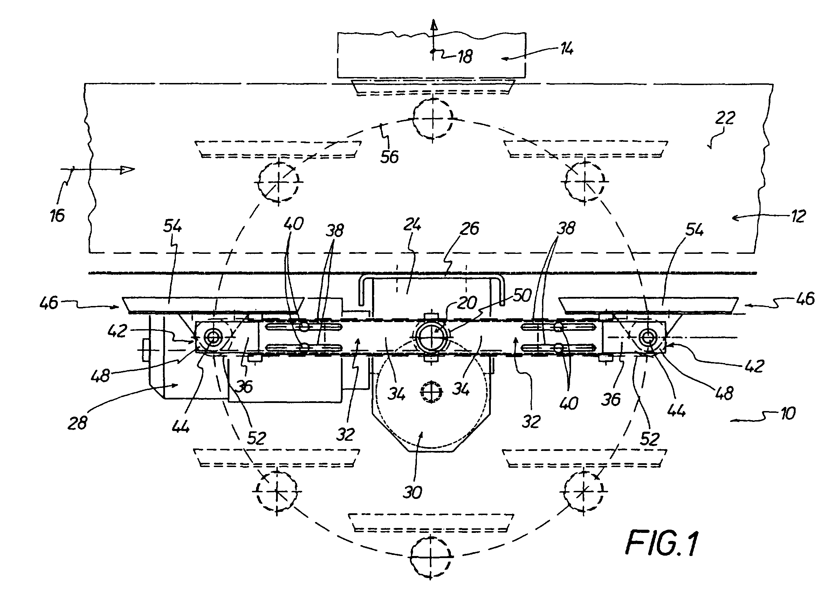

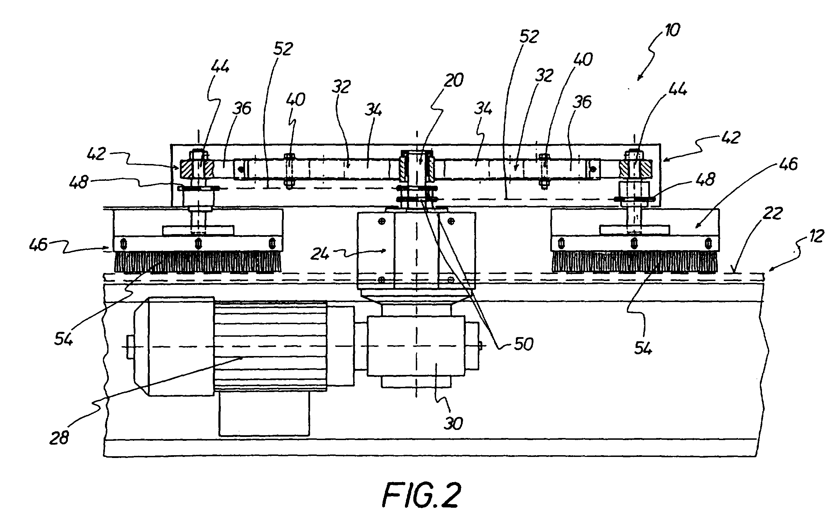

Die Figuren 1 und 2 zeigen eine Ausbildung der Vorrichtung 10 zum Übergeben eines (nicht gezeichneten) Gegenstandes von einer abschnittweise gezeichneten ersten Transporteinrichtung 12 an eine davon abzweigende zweite Transporteinrichtung 14, die in Fig.1 ebenfalls nur abschnittweise angedeutet ist. Die erste Transporteinrichtung 12 dient zum Vorschub von Gegenständen in der durch den Pfeil 16 angedeuteten Vorschubrichtung.

Der Pfeil 18 verdeutlicht die Abförderrichtung der zweiten Transporteinrichtung 14. Von der ersten Transporteinrichtung 12 stehen voneinander beabstandet auf der gleichen Seite eine Anzahl zweite Transporteinrichtungen 14 weg, wobei jeder dieser zweiten Transporteinrichtungen 14 eine Vorrichtung 10 zugeordnet ist. Die jeweilige Vorrichtung 10 ist auf der der zugehörigen zweiten Transporteinrichtung 14 gegenüberliegenden Seite der ersten Transporteinrichtung 12 vorgesehen. Die Vorrichtung 10 weist eine Antriebswelle 20 auf, die seitlich neben der ersten Transporteinrichtung 12 vorgesehen und zur Bahnebene 22 der ersten Transporteinrichtung 12 senkrecht orientiert ist. Zu diesem Zwecke ist die Antriebswelle 20 an einer Lagereinrichtung 24 gelagert, die an einer Konsole 26 passend montiert ist.

Die Antriebswelle 20 wird über eine (nicht dargestellte) Steuerungseinrichtung mittels eines Antriebsmotors 28 angetrieben, d.h. in Drehung versetzt. Zwischen dem Antriebsmotor 28 und der Antriebswelle 20 ist ein Getriebe 30 vorgesehen. Das Getriebe 30 dient erfindungsgemäß zur definierten, drehwinkelabhängigen Änderung der Drehgeschwindigkeit der Antriebswelle 20, wie weiter oben erwähnt worden ist.

Von der Antriebswelle 20 stehen zwei Schwenkarme 32 diametral voneinander abgewandt weg. Jeder der beiden Schwenkarme 32 weist ein erstes von der Antriebswelle 20 wegstehendes und an der Antriebswelle 20 fixiertes erstes Schwenkarmteil 34 sowie ein jeweils zugehöriges zweites Schwenkarmteil 36 auf, wobei die zweiten Schwenkarmteile 36 in Längsrichtung des jeweiligen Schwenkarmes 32 wunschgemäss verstellbar sind. Das wird beispielsweise durch Langlöcher 38 in Kombination mit Befestigungsschrauben 40 erzielt.

Durch die zweiten Schwenkarmteile 36 sind die freien Endabschnitte 42 der beiden Schwenkarme 32 festgelegt. An jedem der beiden freien Endabschnitte 42 ist eine Achse 44 drehbar und axial unbeweglich gelagert. An jeder der beiden Achsen 44 ist ein Verschiebeorgan 46 sowie ein erstes Umlenkorgan 48 fixiert. Bei diesen ersten Umlenkorganen 48 handelt es sich beispielsweise um Kettenzahnräder gleichen Durchmessers, gleicher Zahnteilung und gleicher Zahnung. Zur Antriebswelle 20 der Vorrichtung 10 konzentrisch sind der Anzahl an ersten Umlenkorganen 48 entsprechend zwei zweite Umlenkorgane 50 ortsfest, d.h. mit der ortsfesten Konsole 26 starr verbunden vorgesehen. Die beiden zweiten Umlenkorgane 50 sind gleich ausgebildet wie die beiden ersten Umlenkorgane 48, d.h. sie sind z.B. von Kettenzahnrädern gleichen Durchmessers und gleicher Zahnung bzw. Zahnteilung wie die ersten Umlenkorgane 48 gebildet.

Jedes der beiden ersten Umlenkorgane 48 und das jeweils zugehörige zweite Umlenkorgan 50 sind von einem endlosen Umschlingungselement 52 formschlüssig derartig umschlungen, dass sich zwischen den zweiten und den ersten Umlenkorganen 50, 48 jeweils eine entsprechende formschlüssige Verbindung ergibt. Wird die Antriebswelle 20 also mit Hilfe des Antriebsmotors 28 in Drehung versetzt, so führen die an den freien Endabschnitten 42 der beiden Schwenkarme 32 an den Achsen 44 gelagerten Verschiebeorgane 46 entlang der Kreisbahn 56 (sh. Figur 1) eine Drehbewegung aus, wobei die Verschiebeorgane 46 zur Vorschubrichtung 16 der ersten Transporteinrichtung 12 parallel orientiert positioniert bleiben. Das ist durch drei strichpunktiert gezeichnete Positionen der beiden Verschiebeorgane 46 angedeutet.

Wie aus Figur 1 ersichtlich ist, sind die an den freien Endabschnitten 42 der beiden Schwenkarme 32 vorgesehenen Verschiebeorgane 46 zueinander parallel in die gleiche Richtung, der ersten Transporteinrichtung 12 zugewandt, orientiert. Jedes Verschiebeorgan 46 ist mit einem nachgiebigen Druckkörper 54 versehen. Die Druckkörper 54 können aus einem Schwammaterial, aus einem Kunststoffschaummaterial, bürstenartig oder beliebig anders gestaltet sein.

## Patentansprüche

1. Vorrichtung zum Übergeben eines Gegenstandes von einer ersten Transporteinrichtung (12) an eine zweite Transporteinrichtung (14), die von der ersten Transporteinrichtung (12) abzweigt, mit mindestens zwei Verschiebeorganen (46), die drehfest mit einem jeweils zugehörigen ersten Umlenkorgan (48) verbunden sowie jeweils an einem Schwenkarm (32) gelagert sind, der zum Übergeben eines Gegenstandes mit einer Winkelgeschwindigkeit von einer drehfesten Antriebswelle (20) verschwenkt wird, welche über ein Getriebe (30) antreibbar ist und jedem ersten Umlenkorgan (48) zugeordnet jeweils ein drehfestes zweites Umlenkorgan (50) aufweist, das sich mit einem endlosen Umschlingungselement (52) formschlüssig im Eingriff befindet, das formschlüssig um das zugehörige erste Umlenkorgan (48) umgelenkt ist,
**dadurch gekennzeichnet,**
daß das mit der Antriebswelle (20) verbundene Getriebe (30) zur drehwinkelabhängigen Änderung der Drehgeschwindigkeit der Antriebswelle (20) derart vorgesehen ist, daß der Schwenkarm (32) während der Anlagephase des jeweiligen Verschiebeorganes (46) an einem zu übergebenden Gegenstand eine geringere Winkelgeschwindigkeit aufweist als während der diesen Gegenstand verschiebenden Phase.

2. Vorrichtung nach Anspruch 1,
**dadurch gekennzeichnet,**
dass jeder Schwenkarm (32) in seiner Länge einstellbar ausgebildet ist.

3. Vorrichtung nach einem der vorhergehenden Ansprüche,
**dadurch gekennzeichnet,**
dass jedes Verschiebeorgan (46) einen begrenzt nachgiebigen Druckkörper (54) aufweist.

## Claims

1. Apparatus for transferring an object from a first transporting arrangement (12) to a second transporting arrangement (14), which branches off from the first transporting arrangement (12), having at least two displacement elements (46), which are connected in a rotationally fixed manner to a respectively associated first deflecting element (48) and are each mounted on a pivot arm (32) which, for the purpose of transferring an object, is pivoted at an angular speed by a rotationally fixed drive shaft (20), which can be driven via a gear mechanism (30) and, assigned to each first deflecting element (48), has a rotationally fixed, second deflecting element (50) which is in positively locking engagement with an endless wrap-around element (52), which is deflected in a positively locking manner around the associated first deflecting element (48), characterized in that the gear mechanism (30), which is connected to the drive shaft (20), is provided for changing the rotational speed of the drive shaft (20) in dependence on the angle of rotation such that, during the phase in which the particular displacement element (46) butts against an object which is to be transferred, the pivot arm (32) has a lower angular speed than during the displacement phase of said object.

2. Apparatus according to Claim 1, characterized in that each pivot arm (32) is designed so as to be length-adjustable.

3. Apparatus according to one of the preceding claims, characterized in that each displacement element (46) has a pressure-exerting body (54) which is compliant to a limited extent.

## Revendications

1. Dispositif pour le transfert d'un objet depuis un premier dispositif de transport (12) à un second dispositif de transport (14) qui bifurque depuis le premier dispositif de transfert (12), du type comportant au moins deux organes coulissants (46) qui sont chacun réunis en rotation avec un premier organe de déviation correspondant (48) ainsi qu'avec un bras basculant (32) qui, en vue du transfert d'un objet est soumis à un basculement avec une certaine vitesse angulaire par un arbre d'entraînement solidaire en rotation (20), qui peut être entraîné par un mécanisme (30), et dont chacun présente un premier organe de déviation (48) et un second organe de déviation (50) solidaires en rotation, qui se trouvent réunis en prise unitairement par un élément de réunion sans fin (52) qui est enroulé unitairement autour du premier organe de déviation correspondant (48),
**caractérisé en ce que**
le mécanisme (30) relié à l'arbre d'entraînement (20) en vue de la modification de la vitesse angulaire de l'arbre d'entraînement (20) en fonction de l'angle de rotation est prévu de telle manière que le bras basculant (32) au cours de la phase de mise en place de chaque organe coulissant (46) sur un objet à transférer présente une vitesse angulaire plus petite que pendant la phase de coulissement de cet objet.

2. Dispositif selon la revendication 1, caractérisé en ce que chaque bras basculant (32) est constitué avec une longueur réglable.

3. Dispositif selon l'une des revendications précédentes, caractérisé en ce que chaque organe coulissant (46) présente un corps de compression (54) souple et de dimensions limitées.
